(19) Europäisches Patentamt / European Patent Office / Office européen des brevets

(11) **EP 2 671 848 A1**

(12) **EUROPEAN PATENT APPLICATION**
published in accordance with Art. 153(4) EPC

(43) Date of publication:
**11.12.2013 Bulletin 2013/50**

(51) Int Cl.:
**C03B 8/04** (2006.01)       **C03B 20/00** (2006.01)
**C03C 3/06** (2006.01)

(21) Application number: **12742292.1**

(22) Date of filing: **30.01.2012**

(86) International application number:
**PCT/JP2012/052020**

(87) International publication number:
**WO 2012/105513 (09.08.2012 Gazette 2012/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.01.2011   JP 2011018802**

(71) Applicant: **Asahi Glass Company, Limited
Tokyo 100-8405 (JP)**

(72) Inventors:
 • **MIYASAKA, Junko
   Tokyo 100-8405 (JP)**

 • **OGAWA, Tomonori
   Tokyo 100-8405 (JP)**
 • **KAWAGISHI, Masahiro
   Tokyo 100-8405 (JP)**
 • **TAKATA, Masaaki
   Tokyo 100-8405 (JP)**

(74) Representative: **Müller-Boré & Partner
Patentanwälte
Grafinger Straße 2
81671 München (DE)**

(54) **METHOD FOR PRODUCING SILICA GLASS BODY CONTAINING TITANIA, AND SILICA GLASS BODY CONTAINING TITANIA**

(57)   The present invention relates to a method for producing a silica glass body containing titania, containing: a flame hydrolysis step of feeding a silica ($SiO_2$) precursor and a titania ($TiO_2$) precursor into an oxyhydrogen flame and causing a hydrolysis reaction in the flame to form silica glass fine particles containing titania, in which in the flame hydrolysis step, a reaction rate of the hydrolysis reaction of the silica precursor is 80 % or more.

[FIG. 1]

**Description**

**TECHNICAL FIELD**

The present invention relates to a method for producing a titania ($TiO_2$)-containing silica glass (hereinafter also referred to as "$TiO_2$-$SiO_2$ glass" in the present specification) body and to a $TiO_2$-$SiO_2$ glass body which is produced by this method, in particular, it relates to a method for producing a $TiO_2$-$SiO_2$ glass body which is used as an optical system member of an exposure device of lithography using an EUV light and to a $TiO_2$-$SiO_2$ glass body. Incidentally, the EUV (Extreme Ultra Violet) light as referred to in the present invention means light of a wavelength band in a soft X-ray region or a vacuum ultraviolet region, and specifically, it refers to light having a wavelength of from about 0.2 to 100 nm.

**BACKGROUND ART**

Conventionally, in the photolithography technique, an exposure device for transferring a fine circuit pattern onto a wafer, thereby producing an integrated circuit is widely utilized. With higher integration and higher functionalization of integrated circuits, the microfabrication of the integrated circuit is advancing. The exposure device is hence required to subject a circuit pattern with high resolution to image formation on a wafer surface in a deep focal depth, and shortening of the wavelength of the exposure light source is being advanced. The shortening of the wavelength of the exposure light source is further advancing from conventional g-line (wavelength: 436 nm), i-line (wavelength: 365 mm) and a KrF excimer laser (wavelength: 248 nm), and an ArF excimer laser (wavelength: 193 nm) is coming to be employed. In addition, in order to cope with a next-generation integrated circuit whose circuit pattern line width will become not more than 65 nm, a liquid immersion exposure technique or a double exposure technique using an ArF excimer laser is adopted. However, it is considered that even this would be able to cover only the generation with a line width of up to 22 nm.
Under these circumstances, the lithography technique using an EUV light, typically a light having a wavelength of 13 nm, as an exposure light source is considered to be applicable over generations that a line width of a circuit pattern is 22 nm, and is attracting attention. The principle of image formation in such EUV lithography (hereinafter abbreviated as "EUVL") is identical with that of the conventional photolithography from the viewpoint of transferring a mask pattern using a projection optical system. However, since there is not available a material capable of transmitting light therethrough in the EUV light energy region, a refractive optical system cannot be used. Accordingly, the optical systems are all a reflecting optical system.
The optical system member of an exposure device for EUVL (hereinafter sometimes referred to as "optical member for EUVL") is a photomask or a mirror, and it is basically configured with (1) a base material, (2) a reflective multilayer formed on the base material, and (3) an absorber layer formed on the reflective multilayer. For the reflective multilayer, it is investigated to form an Mo/Si multilayer in which an Mo layer and an Si layer are alternately laminated, and for the absorber layer, Ta or Cr is investigated as a layer-forming material. For the base material, a material having a low coefficient of thermal expansion is required so as not to generate a strain even under irradiation with EUV light, and a glass having a low coefficient of thermal expansion and the like are investigated.
A $TiO_2$-$SiO_2$ glass is known as an extremely low thermal expansion material having a coefficient of thermal expansion (CTE) smaller than that of quartz glass. In addition, since the coefficient of thermal expansion (CTE) can be controlled by the $TiO_2$ content in the glass, a zero-expansion glass whose coefficient of thermal expansion is close to 0 can be obtained. In consequence, the $TiO_2$-$SiO_2$ glass is greatly expected to be used as a material which is used for an optical system member of an exposure device for EUVL.
As the conventional fabrication method of a $TiO_2$-$SiO_2$ glass, there is exemplified a method as described below. That is, there is exemplified a method (direct method) in which first of all, a silica precursor and a titania precursor are converted into a vapor form, respectively and then mixed; the mixture in a vapor form is introduced into a burner and subjected to thermal decomposition (flame hydrolysis) to form $TiO_2$-$SiO_2$ glass particles; and the $TiO_2$-$SiO_2$ glass particles are then deposited in a fire-resistant vessel and simultaneously with the deposition, are molten to form a $TiO_2$-$SiO_2$ glass (see, for example, Patent Document 1). In addition, Patent Document 2 discloses a method in which a $TiO_2$-$SiO_2$ porous glass body is formed and converted into a glass body, and thereafter, a mask base material is obtained therefrom.
However, in the $TiO_2$-$SiO_2$ glasses fabricated by these methods, a stratiform variation of a $TiO_2$/$SiO_2$ composition ratio in the axial direction was generated in a fine region of from 1 $\mu$m to 1 mm, and this appeared as striped striae at a pitch of from about 1 to 200 $\mu$m. Here, the axial direction is defined as a deposition direction of the $TiO_2$-$SiO_2$ glass fine particles. The same is also applicable in the following descriptions. It may be considered that the striped striae are generated because the composition ratio of $TiO_2$ and $SiO_2$ in the $TiO_2$-$SiO_2$ glass varies in a stratiform state in the axial direction, and a refractive index (absolute refractive index) of glass varies depending upon this variation.
In addition, in the above-described direct method, a stratiform variation of the $TiO_2$/$SiO_2$ composition ratio was also generated in the growth direction of glass and appeared as striped striae.
In the case of using a $TiO_2$-$SiO_2$ glass as an optical member for EUVL, the $TiO_2$-$SiO_2$ glass is required to be polished such that its surface has extremely high smoothness. However, in the $TiO_2$-$SiO_2$ glass, mechanical and chemical physical properties vary depending upon the $TiO_2$/$SiO_2$ composition ratio, and hence, a polishing rate does not become constant in sites having a different $TiO_2$/$SiO_2$ composition ratio, and it is difficult to achieve finishing such that the glass surface after polishing has extremely high smoothness. That is, in the case of polishing a $TiO_2$-$SiO_2$ glass with striped striae at a pitch of from 10 to 200 $\mu$m, "waviness" having a pitch the same as the pitch of striae was generated on the glass surface, so that it was very difficult to obtain the extremely high smoothness.

In recent years, as an extremely important required characteristic on the optical member for EUVL, there is a reduction of mid-spatial frequency roughness (MSFR) having a wavy pitch of from 1 $\mu$m to 1 mm. In the case of polishing a $TiO_2$-$SiO_2$ glass obtained by the conventional production method, for the above-described reason, it was difficult to reduce the MSFR because of the generation of "waviness" having a pitch the same as the pitch of striae on the polished surface.

Furthermore, in a $TiO_2$-$SiO_2$ glass body which is used as an optical member for EUVL, it is important to minimize a variation width (variation) of the coefficient of thermal expansion (CTE) in one plane of the glass body (for example, in a plane perpendicular to the deposition and growth direction of $TiO_2$-$SiO_2$ glass particles). The CTE is correlated with the $TiO_2$/$SiO_2$ composition ratio in the $TiO_2$-$SiO_2$ glass, namely the content of $TiO_2$, and hence, in order to suppress the variation of CTE in the above-described plane, it is necessary to suppress a variation of the $TiO_2$ content.

In this way, in the $TiO_2$-$SiO_2$ glass body, in addition to minimize a variation of the $TiO_2$ content appearing as striae in a fine region, it is also required to minimize a variation  of the $TiO_2$ content in the above-described plane. However, in the conventional production methods, there is a trade-off relation between uniformity of the $TiO_2$ content in a fine region and microscopic uniformity in the whole region in the radial direction in a plane perpendicular to the glass deposition direction of the member, and it was difficult to stably produce a $TiO_2$-$SiO_2$ glass body satisfying the both.

Furthermore, Patent Document 3 discloses a $TiO_2$-$SiO_2$ glass body having lowered striae, in which a variation width of refractive index ($\Delta$n) is not more than $2 \times 10^{-4}$ in a plane perpendicular to the incident direction of light, or the $TiO_2$ concentration is 1 % by mass or more, and a stria pitch is not more than 10 $\mu$m. However, in the case of applying the method described in Patent Document 3 to the actual production, there was involved such a problem that a rate of obtaining a glass matrix having a sufficiently low stria level is not high, and the yield becomes low.
In addition, there is also presented a method in which a conversion site into which a silica raw material and a titania raw material are fed includes a furnace having an exhaust vent, and by controlling a flow amount of the exhaust vent, the compositional inhomogeneities are reduced (see, for example, Patent Document 4). However, according to this method, since the reaction of the silica raw material and the titania raw material is incomplete, and it may be considered that the reaction rate varies depending upon the exhaust condition, there was involved such a problem that the $TiO_2$ content is liable to change by a disturbance such as a variation of the exhaust condition, etc.

## CITATION LIST

### PATENT LITERATURE

Patent Document 1: Japanese Patent No. 4108926 (W01999/015468)
Patent Document 2: US-A-2002/157421
Patent Document 3: JP-A-2004-315351 (W02004/089838)
Patent Document 4: JP-T-2005-519349 (W02003/077038)

## SUMMARY OF THE INVENTION

### PROBLEM THAT THE INVENTION IS TO SOLVE

In order to solve the above-described problem, the present invention has been made, and an object thereof is to provide a method for producing a $TiO_2$-$SiO_2$ glass body in a high yield, in which not only a variation of the $TiO_2$ content appearing as striae in a fine region is reduced, but also a reduction of a variation of the $TiO_2$ content in the whole region in the radial direction in a plane perpendicular to the glass deposition direction is  achieved, and low thermal expansion characteristics suitable as an EUVL optical member and extremely high smoothness after polishing can be achieved. In addition, an object of the present invention is to provide a method for obtaining a high-quality $TiO_2$-$SiO_2$ glass body, in which the $TiO_2$ content is hardly affected by a disturbance such as a variation of the exhaust condition, etc.

MEANS FOR SOLVING THE PROBLEM

The present invention provides a method for producing a $TiO_2$-$SiO_2$ glass body, comprising: a flame hydrolysis step of feeding a silica precursor and a titania precursor into an oxyhydrogen flame and causing a hydrolysis reaction in the flame to form $TiO_2$-$SiO_2$ glass fine particles, in which in the flame hydrolysis step, a reaction rate of the hydrolysis reaction of the silica precursor is 80 % or more.

The method for producing a $TiO_2$-$SiO_2$ glass body according to the present invention, preferably comprises a glass fine particle deposition step of depositing the $TiO_2$-$SiO_2$ glass fine particles formed in the flame hydrolysis step on a base material to form a porous glass body; and a step of heating the porous glass body to cause transparent vitrification. Alternatively, it preferably comprises a step of depositing the silica glass fine particles containing titania formed in the flame hydrolysis step in a fire-resistant vessel and simultaneously with the deposition, fusing them to form a $TiO_2$-$SiO_2$ glass body.

In the method for producing a $TiO_2$-$SiO_2$ glass body according to the present invention, it is preferred that in the flame hydrolysis step, a reaction calorie of oxyhydrogen to be fed into the silica precursor is 60 kJ/g or more.

Further, in the method for producing a $TiO_2$-$SiO_2$ glass body according to the present invention, it is preferred that in the flame hydrolysis step, the silica precursor and the titania precursor are fed from a central nozzle of a multi-tubular burner having plural gas feed nozzles disposed in a concentric circle state and hydrolyzed in the oxyhydrogen flame of the multi-tubular burner. Moreover, when a flow rate of a gas in each site in the radial direction of the multi-tubular burner is defined as u (m/sec), a distance of the site in the radial direction from the center of the burner is defined as r (mm), and a radius of the multi-tubular burner is defined as R (mm), it is preferred that the flame hydrolysis is performed under a condition under which a standardized value r' of the weighted center of flow rate of all of gases fed from the multi-tubular burner, as expressed by the following equation (1), is satisfied with a relation of 0.53 < r' < 0.58:

$$r' = (\int u \times r dS \, / \int u dS) / R \ldots (1)$$

(in equation (1), $\int u \times r dS$ is an integrated value of the product of u and r in the cross-sectional direction of the multi-tubular burner, and $\int u dS$ is an integrated value of u in the cross-sectional direction of the multi-tubular burner).

Further, in the method for producing a $TiO_2$-$SiO_2$ glass body according to the present invention, it is preferred that the porous glass body obtained in the glass fine particle deposition step has a content of a $TiO_2$ crystal of not more than 0.5 % by mass.

The $TiO_2$-$SiO_2$ glass body of the present invention is a $TiO_2$-$SiO_2$ glass body produced by the production method of the present invention, in which a content of the $TiO_2$ is from 1 to 12 % by mass; a variation width ($\Delta TiO_2$) of the $TiO_2$ content in a plane perpendicular to the deposition direction of the $TiO_2$-$SiO_2$ glass fine particles is not more than 0.15 % by mass; and a standard deviation ($\sigma TiO_2$) of striae in the $TiO_2$ content level is not more than 0.13 % by mass.

In the $TiO_2$-$SiO_2$ glass body of the present invention preferably has a mass of 10 kg or more.

ADVANTAGEOUS EFFECT OF THE INVENTION

According to the present invention, it is possible to stably obtain a $TiO_2$-$SiO_2$ glass body in a high yield, in which not only a variation width (variation) of the $TiO_2$ content appearing as striae in a fine region is reduced, but also a variation width (variation) of the $TiO_2$ content in the whole region in the radial direction is reduced, and low thermal expansion characteristics suitable as an optical member for EUVL and extremely high smoothness after polishing can be achieved. In addition, there is such an advantage that not only a reaction rate between a silica precursor and a titania precursor is high, and the production efficiency is high, but also the $TiO_2$ content or the like is hardly affected by a disturbance such as a variation of the exhaust condition.

**BRIEF DESCRIPTION OF THE DRAWINGS**

[FIG. 1] FIG. 1 is a perspective view showing an example of a multi-tubular burner which is used for a production method of a porous glass body in the present invention.

[FIG. 2] FIG. 2 is a schematic view showing a positional relation between a multi-tubular burner and a porous glass body.

[FIG. 3] FIG. 3 is a schematic view showing another embodiment of a positional relation between a multi-tubular burner and a porous glass body.

[FIG. 4] FIG. 4 is a graph which is used as a calibration curve for calculating the content (% by mass) of an anatase type $TiO_2$ crystal in a porous glass body.

[FIG. 5] FIG. 5 is a drawing showing points at which samples for determining $\sigma TiO_2$ are taken out.

## MODE FOR CARRYING OUT THE INVENTION

Embodiments of the present invention are hereunder described, but it should not be construed that the present invention is limited thereto.

A production method of a $TiO_2$-$SiO_2$ glass body according to the present invention includes a flame hydrolysis step of feeding a silica precursor and a titania precursor into an oxyhydrogen flame and causing a hydrolysis reaction in this oxyhydrogen flame to form $TiO_2$-$SiO_2$ glass fine particles. Examples of the production method of the present invention include the following methods. That is, there is a method in which the $TiO_2$-$SiO_2$ glass fine particles (soot) obtained in the above-described flame hydrolysis step is deposited and grown on a base material by a soot process, thereby obtaining a porous $TiO_2$-$SiO_2$ glass body, and the obtained porous $TiO_2$-$SiO_2$ glass body is then heated to a densification temperature or higher under reduced pressure or in a helium atmosphere and further heated to a transparent vitrification temperature or higher to obtain a transparent $TiO_2$-$SiO_2$ glass body. The soot process includes an MCVD process, an OVD process, a VAD process and the like, depending on the preparation method of a porous $TiO_2$-$SiO_2$ glass body.

In addition, a method in which the silica precursor and the titania precursor are hydrolyzed and oxidized in an oxyhydrogen flame at from 1,800 to 2,000°C to form $TiO_2$-$SiO_2$ glass fine particles, and the $TiO_2$-$SiO_2$ glass fine particles are deposited in a fire-resistant vessel or the like and simultaneously with the deposition, are molten to form a $TiO_2$-$SiO_2$ glass body (direct method) is also included in the production method of the present invention.

Embodiments of the present invention including a formation step of a porous $TiO_2$-$SiO_2$ glass body by the soot process are hereunder described. The production method of a $TiO_2$-$SiO_2$ glass body according to the present invention by the soot process includes the following respective steps (a) and (e).

(a) Flame hydrolysis and deposition step of glass fine particles (soot):

All of a silica precursor and a titania precursor that are glass forming raw materials are converted (gasified) into vapor forms, they are mixed and fed into an oxyhydrogen flame, and subjected to hydrolysis in this flame to form $TiO_2$-$SiO_2$ glass fine particles (soot).

In order to uniformly feed the gasified silica precursor and titania precursor, it is preferable to provide a stirring mechanism of the gases before feeding into a burner. As the stirring mechanism, there may be considered two kinds of mechanisms inclusive of a mechanism of finely dividing the gases by a part such as a static mixer, a filter, etc. and merging them; and a mechanism of averaging fine variations by introducing the gases into a large space and feeding the gases. In the present invention, it is preferable to produce a glass body by using at least one of the above-described stirring mechanisms, and it is more preferable to use the both. In addition, of the stirring mechanisms, it is preferable to use both of a static mixer and a filter.

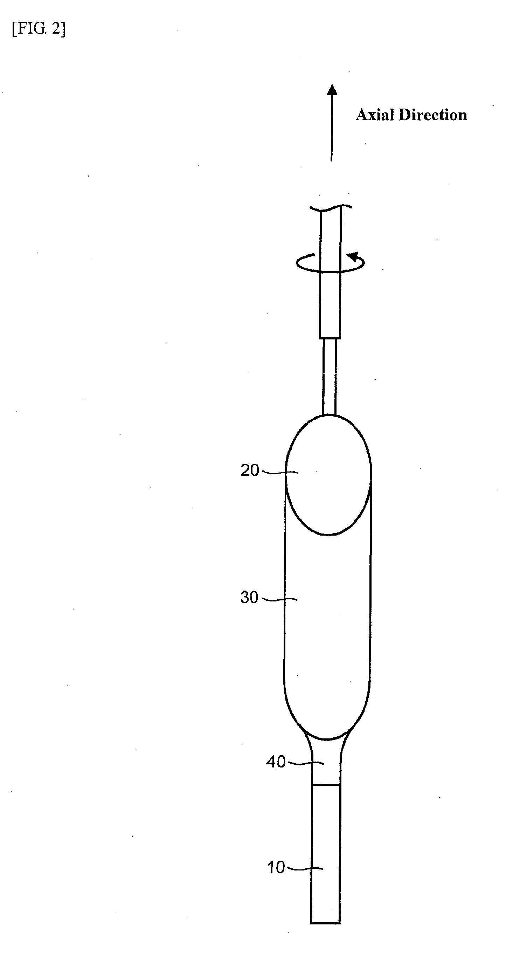

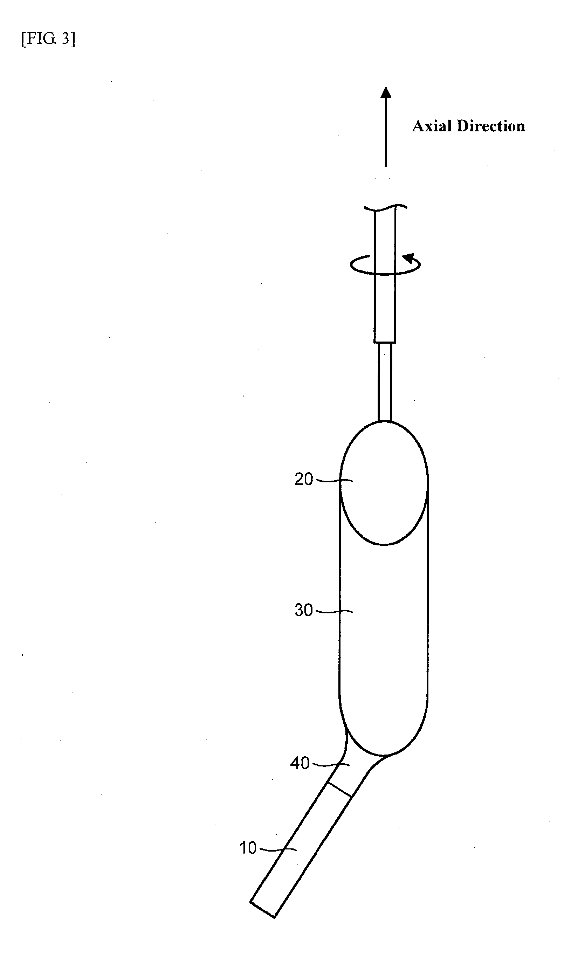

Subsequently, a seed rod rotating around the periphery in the axial direction at a prescribed rate is used as a base material, and the $TiO_2$-$SiO_2$ glass fine particles formed in the above-described flame hydrolysis step are deposited and grown on this base material, thereby forming a porous $TiO_2$-$SiO_2$ glass body. Incidentally, the axial direction is the deposition direction of the $TiO_2$-$SiO_2$ glass fine particles and is shown by an arrow in FIGS. 2 and 3 as described later.

The glass forming raw materials are not particularly limited so long as they are a raw material capable of being gasified. Examples of the silica precursor include silicon halide compounds such as chlorides, for example, $SiCl_4$, $SiHCl_3$, $SiH_2Cl_2$, $SiH_3Cl$, etc., fluorides, for example, $SiF_4$, $SiHF_3$, $SiH_2F_2$, etc., bromides, for example, $SiBr_4$, $SiHBr_3$, etc., and iodides, for example, $SiI_4$, etc.; and alkoxysilanes represented by $R_nSi(OR)_{4-n}$ (wherein R represents an alkyl group having from 1 to 4 carbon atoms; n represents an integer of from 0 to 3; and the plural R's may be the same as or different from each other). In addition, examples of the titania precursor include titanium halide compounds such as $TiCl_4$, $TiBr_4$, etc.; and alkoxytitaniums represented by $R_nTi(OR)_{4-n}$ (wherein R represents an alkyl group having from 1 to 4 carbon atoms; n represents an integer of from 0 to 3; and the plural R's may be the same as or different from each other). Compounds containing both Si and Ti, such as silicon titanium double alkoxides, can also be used as the silica precursor and the titania precursor. As the base material, a quartz glass-made seed rod can be used. In addition, it is not limited to a rod shape, and a plate-shaped base material may also be used.

The present inventors made detailed investigations regarding relations between a reaction rate (%) of the silica precursor (for example, $SiCl_4$) in the flame hydrolysis step of the step (a), and a variation width (variation) of the $TiO_2$ content appearing as striae in a fine region in the obtained $TiO_2$-$SiO_2$ glass body and a variation (variation width) of the $TiO_2$ content in a plane perpendicular to the growth axis of the glass fine particles (soot). As a result, it has been found that the higher the reaction rate of the silica precursor, the smaller the variation of the $TiO_2$ content appearing as striae in a fine region in the $TiO_2$-$SiO_2$ glass body is, and the smaller the variation of the $TiO_2$ content in the above-described plane is. In the production method of the present invention, it is preferable to increase the reaction rate of the silica precursor in the flame hydrolysis step to 80 % or more, and it is especially preferable to increase to 90 % or more.

<Calculation method of reaction rate (%) of silica precursor>

In the case of using, for example, $SiCl_4$ as the silica precursor and $TiCl_4$ as the titania precursor, respectively, the reaction rate of the silica precursor can be calculated, in accordance with the following equation (2), from a composition of the glass raw materials charged and a $TiO_2$ content (average $TiO_2$ content) of the glass body, which is calculated from a value of the $TiO_2$ content measured with respect to the obtained $TiO_2$-$SiO_2$ glass body by means of a fluorescent X-ray analysis (XRF) according to the following calculation equation. Incidentally, $TiCl_4$ is fast in the reaction rate as compared with $SiCl_4$, and its reaction rate is assumed to be 100 %. In addition, as for the $TiO_2$ content (average $TiO_2$ content) of the glass body, a value obtained by measuring the $TiO_2$ content, by XRF, at seven measuring points in the radial direction in a plane perpendicular to the axis with respect to a $TiO_2$-$SiO_2$ dense body obtained in step (c) as described later, or a transparent $TiO_2$-$SiO_2$ glass body obtained in step (d) as described later, and weighting a volume relative to respective diameter was defined as the $TiO_2$ content (average $TiO_2$ content) of the glass body. The calculation equation is shown below.

$$\text{Average } TiO_2 \text{ content (wt\%)} = (\int (TiO_2) \times r^2 dr) / (\int r^2 dr)$$

In the above equation, "$\int (TiO_2) \times r^2 dr$" is an integrated value of the product of the measured value of the $TiO_2$ content at each of the above-described seven measuring points and $r^2$. Incidentally, r is a distance from the center in the radial direction in a plane perpendicular to the axis of the obtained $TiO_2$-$SiO_2$ glass body.

[Equation 1]

$$\text{Reaction rate [\%]} = \frac{TiCl_4 \text{ feed amount [g/min]} \times \dfrac{79.86}{189.71} \times (1 - \dfrac{TiO_2 \text{ content [wt\%]}}{100})}{SiCl_4 \text{ feed amount [g/min]} \times \dfrac{60.08}{169.90} \times \dfrac{TiO_2 \text{ content [wt\%]}}{100}} \quad \cdots (2)$$

Examples of a method of increasing the reaction rate of the silica precursor ($SiCl_4$) include:

(1) To promote the diffusion of the gas,
(2) To raise the temperature of the flame,
(3) To shorten the distance between the feed gases,
(4) To prolong the reaction time, and the like.

Of these, the following methods can be adopted solely or in combination.

(1) Specific examples of the method of promoting the diffusion of the gas include a method of making the standardized weighted center of flow rate as described later outward (the value of r' is set to more than 0.53 and less than 0.58); and the like.
(2) Specific examples of the method of raising the temperature of the flame include a method of increasing a reaction calorie of oxyhydrogen to be fed into the silica precursor to 60 kJ/g (per gram of the glass raw materials) or more; and the like. Incidentally, the reaction heat of oxyhydrogen is calculated in accordance with a thermochemical reaction equation: $H_2 (g) + 1/2 O_2 (g) = H_2O (g) + 249$ kJ.
(3) Specific examples of the method of shortening the distance between the feed gases include a method of making a diameter of the tube for feeding the glass raw materials small; a method of using a burner having a structure in which plural thin tubes are surrounded by a cylindrical tube, feeding the raw materials and a hydrogen gas from the plural thin tubes, and feeding oxygen from the cylindrical tube surrounding the plural thin tubes; and the like.
(4) Specific examples of the method of prolonging the reaction time include a method of prolonging a distance between the burner and the deposition surface; a method of making the flow rate slow; and the like.

In particular, by adopting, solely or in combination, (1) the method of setting the standardized weighted center of flow rate r' to more than 0.53 and less than 0.58 and (2) the method of increasing the reaction calorie of oxyhydrogen to be fed into the silica precursor to 60 kJ/g or more, the reaction rate of the silica precursor ($SiCl_4$) can be increased to 80% or more, which is a reaction rate at which both a reduction of the variation of the $TiO_2$ content in the above-described fine region and a reduction of the variation of the $TiO_2$ content in the plane can be achieved.

The method for forming a porous $TiO_2$-$SiO_2$ glass body by using a multi-tubular burner is hereunder described by reference to the accompanying drawings.

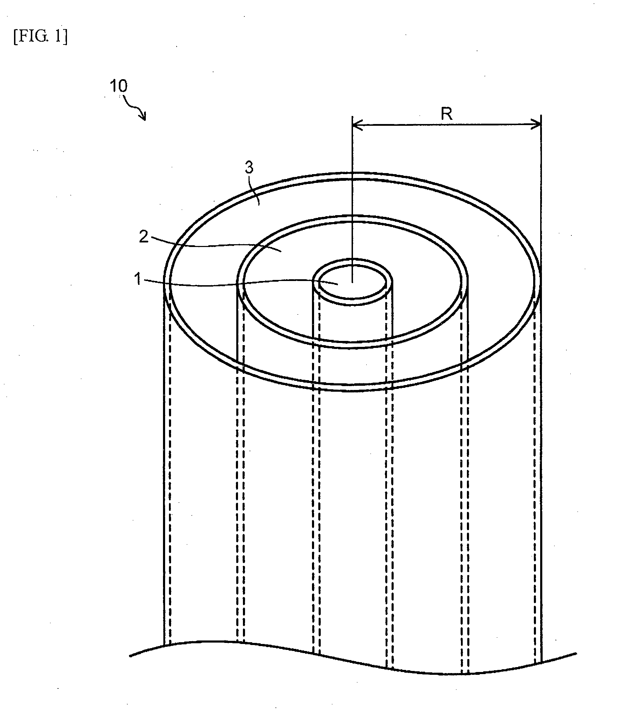

FIG. 1 is a perspective view showing an example of a multi-tubular burner which is used for forming a porous $TiO_2$-$SiO_2$ glass body. A multi-tubular burner 10 shown in FIG. 1 has a triple tubular structure in which a central nozzle 1 is provided in the center thereof, and a first peripheral nozzle 2 and a second peripheral nozzle 3 are disposed in a concentric circle state relative to the central nozzle 1.

In the case of forming a porous glass body by using a multi-tubular burner by the soot process, the glass forming raw materials and combustion gases for forming an oxyhydrogen flame are fed, respectively from the multi-tubular burner. In the multi-tubular burner 10 shown in FIG. 1, the silica precursor (for example, $SiCl_4$) and the titania precursor (for example, $TiCl_4$) are fed from the central nozzle 1.

If the both of oxygen ($O_2$) and hydrogen ($H_2$) that are a combustion gas for forming an oxyhydrogen flame are fed from the same nozzle (in this case, the central nozzle 1), there is a concern that a backfire is generated from the central nozzle 1, or a combustion reaction occurs just around the central nozzle 1, thereby damaging the central nozzle 1. Therefore, one of oxygen and hydrogen (for example, hydrogen) is fed from the central nozzle 1, and the other (for example, oxygen) is fed from the second peripheral nozzle 3 of the multi-tubular burner 10.

From the viewpoint of protecting an edge of the multi-tubular burner 10 from the oxyhydrogen flame, it is preferable to feed a seal gas between the nozzles through which oxygen and hydrogen are flown, respectively. That is, a noncombustible gas such as nitrogen ($N_2$) is fed as the seal gas from the first peripheral nozzle 2 located between the central nozzle 1 through which hydrogen is flown and the second peripheral nozzle 3 through which oxygen is flown.

In the case of using a multi-tubular burner having a quadruplex or multiplex structure, the gases can also be fed in the similar concept as described above.

The silica precursor ($SiCl_4$) and the titania precursor ($TiCl_4$) fed from the central nozzle 1 of the multi-tubular burner 10 are hydrolyzed in the oxyhydrogen flame of the multi-tubular burner 10 to form $TiO_2$-$SiO_2$ glass fine particles (soot), and the formed $TiO_2$-$SiO_2$ glass fine particles are deposited and grown on a base material, thereby forming a porous $TiO_2$-$SiO_2$ glass body.

FIG. 2 is a schematic view showing this procedure and shows a positional relation between the multi-tubular burner 10 and the porous glass body. In FIG. 2, the $TiO_2$-$SiO_2$ glass fine particles are deposited on a base material 20 to form a porous glass body 30. The tip of an oxyhydrogen flame 40 of the multi-tubular burner 10 comes into contact with the deposition surface of the glass fine particles (the surface of the porous glass body 30 in the figure). In order to uniformly deposit the glass fine particles on the base material 20, the base material 20 is rotated during producing the porous glass body 30 as shown in FIG. 2. Incidentally, in FIG. 2, the multi-tubular burner 10 is placed directly under the base material 20. However, as shown in FIG. 3, the oxyhydrogen flame 40 of the multi-tubular burner 10 can also be applied to the base material 20 from the oblique direction.

In the production method of the present invention, in the production step of a porous $TiO_2$-$SiO_2$ glass body, it is preferable to perform the adjustment such that the value r' of the weighted center of flow rate of all of the gases fed from the multi-tubular burner 10, which is standardized with a radius R (mm) of the burner, satisfies a specified condition as described below.

<Calculation method of weighted center of flow rate>

A weighted center of flow rate $r_c$ of all of the gases fed from the multi-tubular burner 10 can be determined in accordance with the following equation (3).

$$r_c = \int u \times r dS \, / \int u dS \, ... \, (3)$$

Here, u is a flow rate (m/sec) of the gas in each site in the radial direction of the multi-tubular burner 10; and r is a distance (mm) of the subject site from the center of the burner in the radial direction. "$\int u \times r dS$" is an integrated value of the product of u and r in the cross-sectional direction of the multi-tubular burner 10. In addition, $\int u dS$ is an integrated value of u in the cross-sectional direction of the multi-tubular burner and is corresponding to the flow amount of the gases charged.

However, the influence by the weighted center of flow rate $r_c$ obtained in accordance with the foregoing equation (3) varies depending upon the radius R of the multi-tubular burner 10. Thus, the value r' obtained by standardizing the weighted center of flow rate $r_c$ with the radius R of the multi-tubular burner 10 (value obtained by dividing $r_c$ by R) is adopted as the weighted center of flow rate in the production method of the present invention.

In the production method of the present invention, it is preferable to perform the flame hydrolysis under a gas feed condition such that the weighted center of flow rate r' which is thus standardized with the radius R (hereinafter referred to as "standardized weighted center of flow rate") is more than 0.53 and less than 0.58 (0.53 < r' < 0.58), thereby producing a porous glass body.

In the case where the standardized weighted center of flow rate r' is 0.58 or more, the diffusion effect of the gases fed from the multi-tubular burner 10 becomes strong, and the glass fine particles carried by the gases also receive this influence. Accordingly, among the formed glass fine particles, a proportion of those deposited on the base material 20 is lowered, so that it takes a long period of time to grow the porous glass body 30. Thus, such is not practical. In addition, the oxyhydrogen flame itself is also diffused, and the resulting shape becomes instable. Thus, in the case where it is intended to produce the porous glass body 30 of a large size, the porous glass body 30 is liable to cause peripheral collapse. The peripheral collapse as referred to herein means that the periphery peels off and collapses while leaving the central part (core) of the porous glass body 30.

On the other hand, in the case where the standardized weighted center of flow rate r' is not more than 0.53, the diffusion of the gases fed from the multi-tubular burner 10 becomes insufficient. Thus, the combustion by mixing of oxygen and hydrogen does not proceed effectively, and it is difficult to increase the reaction rate of $SiCl_4$ to 80 % or more. In addition, at that time, by increasing the reaction calorie of oxyhydrogen to be fed into the silica precursor to 60 kJ/g (per gram of the glass raw materials) or more, the temperature of the flame can be raised, whereby the reaction rate of $SiCl_4$ can be increased to 80 % or more. Here, the reaction heat of oxyhydrogen is calculated in accordance with a thermochemical reaction equation: $H_2 (g) + 1/2O_2 (g) = H_2O (g) + 249$ kJ. Though an upper limit of the reaction calorie is not particularly limited, in view of restrictions on the equipment, it is preferably not more than 100 kJ/g.

In addition, the present inventors have found that there may be the case where $TiO_2$ partially exists as a crystal in the porous $TiO_2$-$SiO_2$ glass body obtained in the step (a), and the content of the $TiO_2$ crystal is correlated with the degree of a variation of the content of $TiO_2$ appearing as striae in a fine region. Since the existence of the $TiO_2$ crystal increases the variation of the content of $TiO_2$ appearing as striae in a fine region, the content of the $TiO_2$ crystal is preferably not more than 0.5 % by mass. The content (% by mass) of the $TiO_2$ crystal in the porous $TiO_2$-$SiO_2$ glass body can be determined using a calibration curved prepared by the following method.

<Calculation method of the content (% by mass) of $TiO_2$ crystal>

A powder of a $TiO_2$ crystal whose crystal system is an anatase type and an $SiO_2$ glass powder were weighed in a mass ratio of (1:99), (3:97), and (5:95), respectively, and these were mixed in an agate mortar. Subsequently, each of the mixed powders was measured for X-ray diffraction (XRD), and each of peak areas of the anatase appearing in the vicinity of $2\theta = 25.3°$ was calculated.

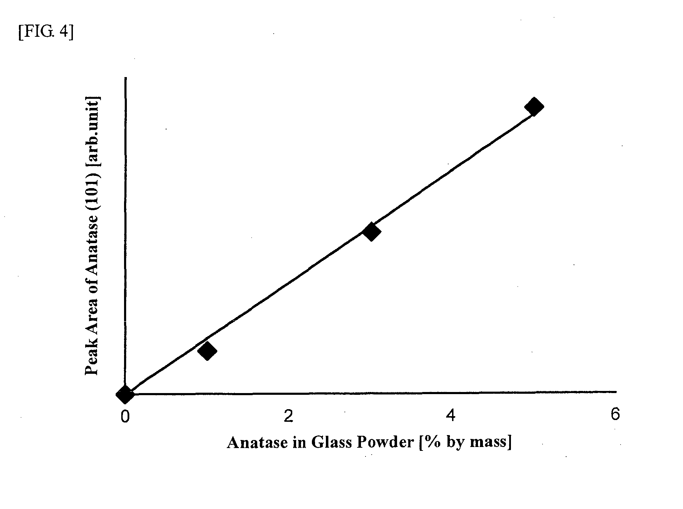

Each of the peak areas of the anatase as thus measured was plotted relative to the content (% by mass) of the $TiO_2$ crystal in each of the mixed powders, thereby obtaining a graph shown in FIG. 4. As shown in FIG. 4, since the content (% by mass) of the $TiO_2$ crystal and the peak area of the anatase show a strong correlation with each other, the content (% by mass) of the $TiO_2$ crystal contained in the porous $TiO_2$-$SiO_2$ glass body can be calculated from the peak area of the anatase by using this calibration curve.

(b) Densification step:

The porous $TiO_2$-$SiO_2$ glass body obtained in the step (a) is heated to the densification temperature under reduced pressure or in a helium atmosphere, thereby obtaining a $TiO_2$-$SiO_2$ dense body. The densification temperature is usually from 1,250 to 1,550°C, and especially preferably from 1,300 to 1,500°C. Incidentally, the densification temperature as referred to in the present specification means a temperature at which the porous glass body can be densified to an extent that a pore cannot be confirmed with an optical microscope.

(c) Transparent vitrification step:

The $TiO_2$-$SiO_2$ dense body obtained in the step (b) is heated to the transparent vitrification temperature, thereby obtaining a transparent $TiO_2$-$SiO_2$ glass body. The transparent vitrification temperature is usually from 1,350 to 1,800°C, and especially preferably from 1,400 to 1,750°C. Incidentally, the transparent vitrification temperature as referred to in the present specification means a temperature at which a crystal cannot be confirmed with an optical microscope, and a transparent glass is obtained.

The atmosphere during the transparent vitrification is preferably an atmosphere of a 100 % inert gas such as helium, argon, etc., or an atmosphere composed mainly of the above-described inert gas. The pressure may be either a reduced pressure or an ordinary pressure. In the case of reduced pressure, it is preferably not more than $1 \times 10^4$ Pa.

(d) Molding step:

The transparent $TiO_2$-$SiO_2$ glass body obtained in the step (c) is heated to a temperature of the softening point or higher and molded into a desired shape, thereby obtaining a molded $TiO_2$-$SiO_2$ glass body. The temperature for molding processing is preferably from 1,500 to 1,800°C. When the molding temperature is lower than 1,500°C, since the viscosity of the $TiO_2$-$SiO_2$ glass is high, the self-weight deformation is not substantially achieved, and the growth of cristobalite that is a crystal phase of $SiO_2$, or the growth of rutile or anatase that is a crystal phase of $TiO_2$ occurs, whereby so-called devitrification is generated. When the molding temperature is 1,800°C or higher, sublimation of $SiO_2$ cannot be ignored. Incidentally, the above transparent vitrification step (c) and molding step (d) can also be performed continuously or simultaneously.

(e) Annealing step:

The molded $TiO_2$-$SiO_2$ glass body obtained in the step (d) can be subjected to an annealing step by a known method. For example, after keeping the glass body at a temperature of from 600 to 1,200°C for one hour or more, the resultant is subjected to an annealing treatment in such a manner that the temperature is decreased to 900 to 700°C or lower at an average temperature decreasing rate of not more than 10°C/hr, thereby controlling a fictive temperature of the $TiO_2$-$SiO_2$ glass body. Alternatively, the molded $TiO_2$-$SiO_2$ glass body of 1,200°C or higher, which is obtained in the step (d), is subjected to an annealing treatment in such a manner that the temperature is decreased to 900 to 700°C or lower at an average temperature decreasing rate of not more than 60°C/hr, thereby controlling a fictive temperature of the $TiO_2$-$SiO_2$ glass body. After cooling to 900 to 700°C or lower, the resultant can be allowed to stand for cooling. The atmosphere of the annealing treatment is an atmosphere of a 100 % inert gas such as helium, argon, nitrogen, etc., an atmosphere composed mainly of the above-described inert gas, or an air atmosphere. The pressure is preferably a reduced pressure or an ordinary pressure.

The thus obtained $TiO_2$-$SiO_2$ glass body may be a large-sized body having a mass (mass of 1 lot produced by a single operation) of 10 kg or more. Then, it is preferable that the $TiO_2$-$SiO_2$ glass body is free from an inclusion. The inclusion means a foreign matter or a bubble existing in the glass, and there is a concern that it is generated by contamination or crystal deposition in the glass preparation step. In order to eliminate an inclusion such as a foreign matter, a bubble, etc., in the foregoing production steps, and in particular, in the step (a), it is necessary to suppress the contamination. Furthermore, it is necessary to precisely control the temperature conditions of the steps (b) to (d).

In addition, the content of $TiO_2$ in the obtained $TiO_2$-$SiO_2$ glass body is preferably from 1 to 12 % by mass. When the content of $TiO_2$ is less than 1 % by mass, there is a concern that zero expansion is not achieved, whereas when it exceeds 12 % by mass, there may be a possibility that the coefficient of thermal expansion becomes negative. The $TiO_2$ content is more preferably from 5 to 9 % by mass.

Furthermore, in the obtained $TiO_2$-$SiO_2$ glass body, not only a variation of the $TiO_2$ content appearing as striae in a fine region is small, but also a variation of the $TiO_2$ content in a plane perpendicular to the axial direction (deposition direction of the $TiO_2$-$SiO_2$ glass fine particles) is small. Specifically, a standard deviation ($\sigma TiO_2$) of the $TiO_2$ content in a fine region as measured by the following method is not more than 0.13 % by mass, and a difference ($\Delta TiO_2$) between maximum value and minimum value of the $TiO_2$ content in a plane perpendicular to the axial direction is not more than 0.15 % by mass.

<Measurement method of $\sigma TiO_2$ (% by mass)>

The standard deviation ($\sigma TiO_2$) of the $TiO_2$ content in a fine region of the finally obtained $TiO_2$-$SiO_2$ glass body can be determined by the following procedures.

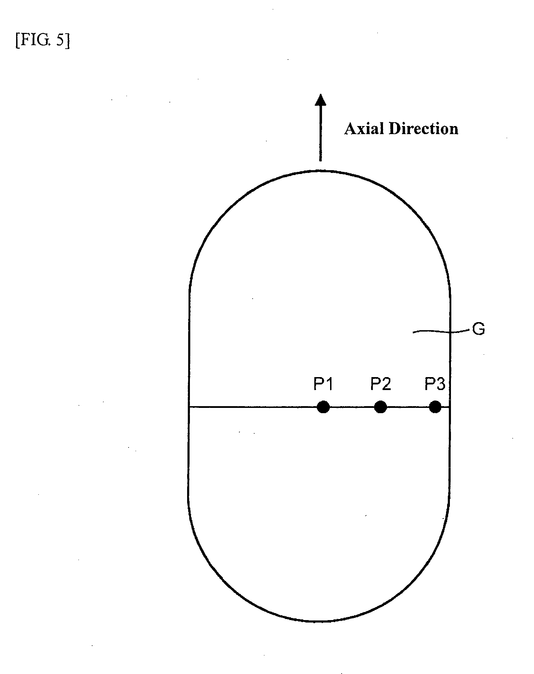

A sample having a size of 15 mm $\times$ 15 mm $\times$ 3 mm is cut out from the $TiO_2$-$SiO_2$ glass body after the transparent vitrification step (step (c)) such that the plane of 15 mm $\times$ 15 mm is parallel to the deposition direction of the $TiO_2$-$SiO_2$ fine particles (such that the cross section is a plane having striae), the plane of 15 mm $\times$ 15 mm having striae (stria surface) is mirror-polished until the thickness becomes from 0.1 to 3 mm, and the stria surface is then subjected to carbon sputtering coating. This sample is set in an electron probe microanalyzer (EPMA) (manufactured by JEOL, Ltd., JXA8900), and the contents (% by mass) of $TiO_2$ and $SiO_2$ are measured from characteristic X-ray spectra of Ti and Si. The measurement range is set to a range of 1,000 $\mu m$ perpendicular to the stria direction, the irradiation condition of electron beams is set to 25 kV for accelerating voltage and 30 nA for current, and the positional accuracy is set to 5 $\mu m$. A variation width (variation) of the measured value of the thus obtained $TiO_2$ content is determined as a standard deviation $\sigma TiO_2$ in the respective sample. As shown in FIG. 5, in a $TiO_2$-$SiO_2$ glass body G, samples are taken out at three points of a center (P1) in the radial direction, an intermediate point (P2) between the center and edge, and an edge (P3), and an average value of standard deviations $\sigma_1 TiO_2$ to $\sigma_3 TiO_2$ in the respective samples is defined as $\sigma TiO_2$.

<Measurement method of $\Delta TiO_2$ (% by mass)>

The $TiO_2$-$SiO_2$ glass body after the transparent vitrification step (step (c)) is divided into nine equal parts in one radial direction passing through the center in a plane perpendicular to the axis, the $TiO_2$ content is measured at seven points exclusive of two points on the outermost periphery by means of XRF, and a difference between the maximum value and the minimum value of these measured values is determined as $\Delta TiO_2$.

The standard deviation of striae ($\sigma TiO_2$) in the $TiO_2$-$SiO_2$ glass body after the transparent vitrification step (step (c)) and MSFR of the glass surface at the time of mirror polishing after the annealing step (the step (e)) are correlated with each other. In consequence, by measuring the $\sigma TiO_2$ of striae after the step (c), the MSFR of the glass surface after mirror polishing can be expected.

Incidentally, the value of MSFR used at the time of examining the correlation is one measured for the surface shape of a region to be used as an optical member by means of a non-contact surface profiler (manufactured by Zygo, NewView 5032) with respect to the mirror-polished glass surface. For the measurement, an object lens of 2.5 magnifications was used. The measured surface profile was divided into every regular square region of $2 \times 2$ mm, and an rms value was calculated and defined as a smoothness. In addition, at the time of calculating the rms value, a data treatment was performed by using a band pass filter having a wavelength of from 1 $\mu$m to 1 mm, and wavy components having wavelengths other than the foregoing wavelength region were removed.

When the $TiO_2$-$SiO_2$ glass body having a standard deviation ($\sigma TiO_2$) of the $TiO_2$ content in a fine region of not more than 0.13 % by mass, obtained by the production method of the present invention is polished, the value of MSFR having a wavy pitch falling within the range of from 1 $\mu$m to 1 mm, which is an index expressing the smoothness on the polished surface, is expected to be not more than 10 nm. The surface smoothness (rms) of an optical system member of an exposure device for EUVL using the $TiO_2$-$SiO_2$ glass body is preferably not more than 10 nm, more preferably not more than 8 nm, and still more preferably not more than 6 nm. Accordingly, by using the $TiO_2$-$SiO_2$ glass body obtained by the production method of the present invention, an extremely highly smooth surface which is suitable as an optical member for EUVL can be obtained.

Further, the $TiO_2$-$SiO_2$ glass body obtained by the production method of the present invention is suitable as an optical member for EUVL, because the variation of the $TiO_2$ content ($\Delta TiO_2$) in a plane perpendicular to the axis is not more than 0.15 % by mass and hence the variation of CTE is extremely small (not more than $\pm 6$ ppb/°C). That is, since the $TiO_2$ content of a $TiO_2$-$SiO_2$ glass body and the CTE are correlated with each other, when a variation of the CTE in the $TiO_2$-$SiO_2$ glass body of the present invention is determined from the variation of the $TiO_2$ content ($\Delta TiO_2$) (not more than 0.15 % by mass) according to the calibration curve expressing the relation between the $TiO_2$ content and the CTE, it becomes not more than $\pm 6$ ppb/°C at room temperature. In consequence, the $TiO_2$-$SiO_2$ glass body of the present invention is suitable as an optical member for EUVL because the variation of the CTE can be, for example, made to be within $\pm 6$ ppb/°C at room temperature.

EXAMPLES

The present invention is described in more detail with reference to the following Examples, but it should not be construed that the present invention is limited thereto.

Example 1

$TiCl_4$ and $SiCl_4$, each of which is a raw material for forming a $TiO_2$-$SiO_2$ glass, were gasified, respectively and then mixed, and subjected to hydrolysis (flame hydrolysis) in an oxyhydrogen flame. Then, the obtained $TiO_2$-$SiO_2$ glass fine particles were deposited and grown on a quartz-made seed rod rotating at a rotation rate of 25 rpm, thereby forming a porous $TiO_2$-$SiO_2$ glass body (step (a)).

Here, in the flame hydrolysis, a multi-tubular burner was used, and $TiCl_4$, $SiCl_4$, and hydrogen ($H_2$) were fed into a central nozzle, whereas hydrogen ($H_2$), oxygen ($O_2$), or nitrogen ($N_2$) was fed into each of plural peripheral nozzles. $TiCl_4$ and $SiCl_4$ were fed in a feed ratio {(feed amount of $TiCl_4$ [g/min]) / (feed amount of $SiCl_4$ [g/min])} of 0.050 per minute. Then, the flame hydrolysis was performed under gas conditions adjusted such that a reaction calorie of oxyhydrogen ($H_2 \cdot O_2$) to be fed into $SiCl_4$ was 68 kJ/g, and a standardized weighted center of flow rate r' of the multi-tubular burner was 0.556. Incidentally, the reaction calorie is calculated on the assumption that charged hydrogen ($H_2$) entirely combusted and reacted.

Since the obtained porous $TiO_2$-$SiO_2$ glass body was hardly handled as it was, it was held in the atmosphere at 1,200°C for 6 hours in a state of being deposited on the base material and then taken out from the seed rod. The

obtained porous $TiO_2$-$SiO_2$ glass body had a diameter of 250 mm and a mass of 17 kg.

Subsequently, the porous $TiO_2$-$SiO_2$ glass body was placed in an electric furnace capable of controlling the atmosphere and evacuated to 10 Pa or less at room temperature. Thereafter, the temperature was raised to 1,360°C while keeping the reduced pressure, and the resultant was kept at this temperature for 2 hours, thereby obtaining a $TiO_2$-$SiO_2$ dense body (step (b)).

The thus obtained $TiO_2$-$SiO_2$ dense body was heated to 1,700°C in an argon atmosphere by using a carbon furnace, thereby obtaining a transparent $TiO_2$-$SiO_2$ glass body (step (c)).

Furthermore, the molded $TiO_2$-$SiO_2$ glass body obtained by molding was subjected to an annealing treatment of holding at 1,100°C for 10 hours, and the temperature was decreased to 500°C at a rate of 3°C/hr, followed by standing for cooling in the atmosphere, whereby a $TiO_2$-$SiO_2$ glass body was obtained (step (e)).

A reaction rate of the silica precursor ($SiCl_4$) in the step (a), a calorie to be fed into $SiCl_4$, a weighted center of flow rate standardized with a radius of the multi-tubular burner, an amount of $TiO_2$ crystal in the porous $TiO_2$-$SiO_2$ glass body obtained in the step (a), an average $TiO_2$ content in the transparent $TiO_2$-$SiO_2$ glass body obtained in the step (c), and the capable/incapable of synthesis of a porous body are shown in Table 1. The amount of $TiO_2$ crystal and the average $TiO_2$ content were measured in accordance with the above-described measurement methods.

In addition, the same method was further repeated nine times, thereby obtaining ten $TiO_2$-$SiO_2$ glass bodies in total. The obtained glass bodies had a diameter of about 250 mm and a mass of from 17 to 20 kg. Values of $\Delta TiO_2$ of these ten glass bodies were measured. An average value thereof, the number of glass bodies whose $\Delta TiO_2$ value became 0.2 (wt%) or less and a proportion thereof, and the number of glass bodies whose value became 0.15 (wt%) or less and a proportion thereof are shown in Table 2. Further, values of $\sigma TiO_2$ were measured, and an average value thereof and the number of glass bodies whose $\sigma TiO_2$ value became 0.13 (wt%) or less are shown in Table 2. The $\Delta TiO_2$ and the $\sigma TiO_2$ were measured in accordance with the above-described measurement methods.

Example 2

A $TiO_2$-$SiO_2$ glass body was obtained in the same manner as in Example 1, except that in the step (a), the gas conditions were adjusted such that the calorie to be fed into $SiCl_4$ was 69 kJ/g, and the standardized weighted center of flow rate was 0.568. Results obtained by measuring the reaction rate, calorie, weighted center of flow rate, and amount of $TiO_2$ crystal in the same manners as in Example 1 are shown in Table 1. Subsequently, the same method was further repeated nine times, thereby obtaining ten $TiO_2$-$SiO_2$ glass bodies in total. The obtained glass bodies had a diameter of about 250 mm and a mass of from 17 to 20 kg. Results obtained by measuring $\Delta TiO_2$ and $\sigma TiO_2$ in the same manners as in Example 1 are shown in Table 2.

Comparative Example 1

A $TiO_2$-$SiO_2$ glass body was obtained in the same manner as in Example 1, except that in the step (a), $TiCl_4$ and $SiCl_4$ were fed in a feed ratio {(feed amount of $TiCl_4$ [g/min]) / (feed amount of $SiCl_4$ [g/min])} of 0.049 per minute; and that the flame hydrolysis was performed under gas conditions adjusted such that the calorie to be fed into $SiCl_4$ was 33 kJ/g, and the standardized weighted center of flow rate was 0.526. Results obtained by measuring the reaction rate, calorie, weighted center of flow rate, and amount of $TiO_2$ crystal in the same manners as in Example 1 are shown in Table 1. Subsequently, the same method was further repeated nine times, thereby obtaining ten $TiO_2$-$SiO_2$ glass bodies in total. The obtained glass bodies had a diameter of about 250 mm and a mass of from 17 to 20 kg. Results obtained by measuring $\Delta TiO_2$ and $\sigma TiO_2$ in the same manners as in Example 1 are shown in Table 2.

Comparative Example 2

A $TiO_2$-$SiO_2$ glass body was obtained in the same manner as in Example 1, except that in the step (a), $TiCl_4$ and $SiCl_4$ were fed in a feed ratio {(feed amount of $TiCl_4$ [g/min]) / (feed amount of $SiCl_4$ [g/min])} of 0.042 per minute; and that the flame hydrolysis was performed under gas conditions adjusted such that the calorie to be fed into $SiCl_4$ was 34 kJ/g, and the standardized weighted center of flow rate was 0.526. Results obtained by measuring the reaction rate, calorie, weighted center of flow rate, and amount of $TiO_2$ crystal in the same manners as in Example 1 are shown in Table 1. Subsequently, the same method was further repeated nine times, thereby obtaining ten $TiO_2$-$SiO_2$ glass bodies in total. The obtained glass bodies had a diameter of about 250 mm and a mass of from 17 to 20 kg. Results obtained by measuring $\Delta TiO_2$ and $\sigma TiO_2$ in the same manners as in Example 1 are shown in Table 2.

Comparative Example 3

The synthesis was performed in the same manner as in Example 1, except that in the step (a), the flame hydrolysis was performed under gas conditions adjusted such that the calorie to be fed into $SiCl_4$ was 68 kJ/g, and the standardized weighted center of flow rate was 0.602. However, collapse occurred on the way, so that a porous $TiO_2$-$SiO_2$ glass body was not obtained. It is considered that this was caused because the weighted center of flow rate moved outside and diffusion was promoted, and as a result, a disturbance of the flame was caused, thereby generating the breakage of a relatively weak portion of the periphery.

[Table 1]

|  | Ex. 1 | Ex. 2 | Comp. Ex. 1 | Comp. Ex. 2 | Comp. Ex. 3 |
|---|---|---|---|---|---|
| Reaction rate (%) | 92 | 93 | 75 | 77 | - |
| Calorie (kJ/g) | 68 | 69 | 33 | 34 | 68 |
| Standardized weighted center of flow rate (mm) | 0.556 | 0.568 | 0.526 | 0.526 | 0.602 |
| Amount of $TiO_2$ crystal (wt %) | 0.3 | 0.3 | 2.3 | 1.2 | - |
| Average $TiO_2$ concentration (wt%) | 6.1 | 5.9 | 6.3 | 6.2 | - |
| Capable/incapable of synthesis of porous body | ○ | ○ | ○ | ○ | X (collapsed) |

[Table 2]

|  | Ex. 1 | Ex. 2 | Comp. Ex. 1 | Comp. Ex. 2 | Comp. Ex. 3 |
|---|---|---|---|---|---|
| $\Delta TiO_2$ (wt%) (Average value of ten glass bodies) | 0.14 | 0.11 | 0.38 | 0.26 | - |
| Number of glass bodies whose $\Delta TiO_2$ is 0.2 (wt%) or less | 7 | 9 | 3 | 4 | - |
| Proportion of the above-described glass bodies (%) | 70 | 90 | 30 | 40 | - |
| Number of glass bodies whose $\Delta TiO_2$ is 0.15 (wt%) or less | 6 | 8 | 1 | 2 | - |
| Proportion of the above-described glass bodies (%) | 60 | 80 | 10 | 20 | - |
| $\sigma TiO_2$ (wt%) (Average value of ten glass bodies) | 0.09 | 0.06 | 0.12 | 0.15 | - |
| Number of glass bodies whose $\sigma TiO_2$ is 0.13 (wt%) or less | 10 | 10 | 8 | 0 | - |

As is noted from Tables 1 and 2, in Examples 1 and 2 in which the flame hydrolysis was performed under gas conditions adjusted such that the calorie to be fed into $SiCl_4$ that is a silica precursor is 60 kJ/g or more, and the weighted center of flow rate standardized with a radium of the multi-tubular burner is more than 0.53 and less than 0.58, thereby increasing the reaction rate of $SiCl_4$ to 80 % or more, in the obtained $TiO_2$-$SiO_2$ glass body, a standard deviation ($\sigma TiO_2$) of the $TiO_2$ content in a fine region is not more than 0.13 % by mass, and the glass body in which a variation ($\Delta TiO_2$) of the $TiO_2$ content in the radial direction in a plane perpendicular to the axis is not more than 0.15 % by mass can be stably obtained. In consequence, the $TiO_2$-$SiO_2$ glass bodies obtained Examples 1 and 2 can be suitably used as an optical member for EUVL because it is possible to realize extremely high smoothness with an MSFR of not more than 10 nm by means of polishing and the variation of the CTE becomes extremely small (for example, not more than $\pm6$ ppb/°C at room temperature).

On the other hand, in Comparative Examples 1 and 2 in which the reaction rate of $SiCl_4$ is lower than 80 %, a $TiO_2$-$SiO_2$ glass body in which both of the uniformity of the $TiO_2$ content in a fine region and the uniformity of the $TiO_2$ content in the radial direction in a plane of the member are simultaneously achieved cannot be stably obtained. That is, in Comparative Example 1, a $TiO_2$-$SiO_2$ glass body in which the uniformity of the $TiO_2$ content in a fine region is relatively good but the variation of the $TiO_2$ content in the radial direction in a plane perpendicular to the axis is large is obtained; and in Comparative Example 2, though the variation of the $TiO_2$ content in the radial direction in a plane perpendicular to the axis is good as compared with that in Comparative Example 1, the variation of the $TiO_2$ content in a fine region is large. In this way, in both of Comparative Examples 1 and 2, a $TiO_2$-$SiO_2$ glass body which is suited as an optical member for EUVL cannot be stably obtained.

While the present invention has been described in detail and with reference to specific embodiments thereof, it will be apparent to one skilled in the art that various changes and modifications can be made therein without departing from the spirit and scope thereof.

The present application is based on Japanese Patent Application No. 2011-018802, filed on January 31, 2011, the entirety of which is invoked herein by reference.

INDUSTRIAL APPLICABILITY

According to the present invention, a $TiO_2$-$SiO_2$ glass body which can be suitably used as an optical system member of an exposure device for EUVL can be obtained.

**DESCRIPTION OF REFERENCE NUMERALS AND SIGNS**

1... Central nozzle; 2... First peripheral nozzle; 3... Second peripheral nozzle; 10... Multi-tubular burner; 20... Base material; 30... Porous glass body; and 40... Oxyhydrogen flame

**Claims**

1.  A method for producing a silica glass body containing titania, comprising:

    a flame hydrolysis step of feeding a silica ($SiO_2$) precursor and a titania ($TiO_2$) precursor into an oxyhydrogen flame and causing a hydrolysis reaction in the flame to form silica glass fine particles containing titania; and
    a glass fine particle deposition step of depositing the silica glass fine particles containing titania formed in the flame hydrolysis step, wherein
    in the flame hydrolysis step, a reaction rate of the hydrolysis reaction of the silica precursor is 80 % or more.

2.  The method for producing a silica glass body containing titania according to claim 1, wherein
    the glass fine particle deposition step is a step of depositing the silica glass fine particles containing titania formed in the flame hydrolysis step on a base material to form a porous glass body; and
    the production method further comprises a step of heating the porous glass body to cause transparent vitrification.

3.  The method for producing a silica glass body containing titania according to claim 1, wherein
    the glass fine particle deposition step is a step of depositing the silica glass fine particles containing titania formed in the flame hydrolysis step in a fire-resistant vessel and simultaneously with the deposition, fusing them to form a silica glass body containing titania.

4.  The method for producing a silica glass body containing titania according to any one of claims 1 to 3, wherein
    in the flame hydrolysis step, a reaction calorie of oxyhydrogen to be fed into the silica precursor is 60 kJ/g or more.

5.  The method for producing a silica glass body containing titania according to any one of claims 1 to 4, wherein
    in the flame hydrolysis step, the silica precursor and the titania precursor are fed from a central nozzle of a multi-tubular burner having plural gas feed nozzles disposed in a concentric circle state and hydrolyzed in the oxyhydrogen flame of the multi-tubular burner.

6.  The method for producing a silica glass body containing titania according to claim 5, wherein
    when a flow rate of a gas in each site in the radial direction of the multi-tubular burner is defined as u (m/sec), a distance of the site in the radial direction from the center of the burner is defined as r (mm), and a radius of the multi-tubular burner is defined as R (mm), the flame hydrolysis is performed under a condition under which a standardized value r' of weighted center of flow rate of all of gases fed from the multi-tubular burner, as expressed by the following equation (1), is satisfied with a relation of 0.53 < r' < 0.58:

$$r' = (\int u \times r dS \, / \int u dS) \, / \, R \ ... \ (1)$$

    (in equation (1), $\int u \times r dS$ is an integrated value of the product of u and r in the cross-sectional direction of the multi-tubular burner, and $\int u dS$ is an integrated value of u in the cross-sectional direction of the multi-tubular burner).

7. The method for producing a silica glass body containing titania according to claim 2, wherein
the porous glass body obtained in the glass fine particle deposition step has a content of a titania crystal of not more than 0.5 % by mass.

8. A silica glass body containing titania produced by the production method described in any one of claims 1 to 7, wherein a content of the titania is from 1 to 12 % by mass; a variation width ($\Delta TiO_2$) of the titania content in a plane perpendicular to the deposition direction of the silica glass fine particles containing titania is not more than 0.15 % by mass; and a standard deviation ($\sigma TiO_2$) of the titania content in a fine region is not more than 0.13 % by mass.

9. The silica glass body containing titania according to claim 8, having a mass of 10 kg or more.

[FIG. 1]

[FIG. 2]

Axial Direction

20

30

40

10

[FIG. 3]

[FIG. 4]

[FIG. 5]

<table>
<tr><td colspan="2">**INTERNATIONAL SEARCH REPORT**</td><td colspan="2">International application No.<br>PCT/JP2012/052020</td></tr>
</table>

A. CLASSIFICATION OF SUBJECT MATTER
*C03B8/04*(2006.01)i, *C03B20/00*(2006.01)i, *C03C3/06*(2006.01)i

According to International Patent Classification (IPC) or to both national classification and IPC

B. FIELDS SEARCHED

Minimum documentation searched (classification system followed by classification symbols)
C03B8/04, C03B20/00, C03C3/06

Documentation searched other than minimum documentation to the extent that such documents are included in the fields searched
Jitsuyo Shinan Koho          1922-1996    Jitsuyo Shinan Toroku Koho    1996-2012
Kokai Jitsuyo Shinan Koho    1971-2012    Toroku Jitsuyo Shinan Koho    1994-2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2008-115054 A (Covalent Materials Corp.),<br>22 May 2008 (22.05.2008),<br>entire text<br>(Family: none) | 1-9 |
| A | JP 59-174535 A (Shin-Etsu Chemical Co., Ltd.),<br>03 October 1984 (03.10.1984),<br>entire text<br>(Family: none) | 1-9 |
| A | JP 2010-163345 A (Asahi Glass Co., Ltd.),<br>29 July 2010 (29.07.2010),<br>entire text<br>& US 2010/0323871 A1    & EP 2247546 A<br>& WO 2009/107858 A1    & KR 10-2010-0116639 A<br>& CN 101959820 A | 1-9 |

☐ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>19 March, 2012 (19.03.12) | Date of mailing of the international search report<br>03 April, 2012 (03.04.12) |
|---|---|
| Name and mailing address of the ISA/<br>Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4108926 B
- WO 1999015468 A
- US 2002157421 A
- JP 2004315351 A
- WO 2004089838 A
- JP 2005519349 T
- WO 2003077038 A
- JP 2011018802 A